# EUROPEAN PATENT SPECIFICATION

(11) **EP 3 179 361 B1**
(45) Date of publication and mention of the grant of the patent: **25.03.2020**
(21) Application number: 15794445.5
(22) Date of filing: 08.01.2015
(51) Int. Cl.: G06F 3/14, G06F 3/023, G06F 3/038, G09G 5/00

(54) **EXTERNAL DISPLAY SYSTEM AND EXTERNAL DISPLAY METHOD THEREFOR**
EXTERNES ANZEIGESYSTEM UND EXTERNES ANZEIGEVERFAHREN DAFÜR
SYSTÈME D'AFFICHAGE EXTERNE ET SON PROCÉDÉ D'AFFICHAGE EXTERNE

(30) Priority: 07.08.2014 CN 201410387582
(43) Date of publication of application: 14.06.2017
(73) Proprietor: Huizhou TCL Mobile Communication Co., Ltd., Huizhou, Guangdong 516006 (CN)
(72) Inventor: LUO, Minli, Huizhou Guangdong 516006 (CN); YING, Wei, Huizhou Guangdong 516006 (CN)
(74) Representative: ZHAOffice SPRL
(86) International application number: PCT/CN2015/070365
(87) International publication number: WO 2016/019703

(56) References cited:
- CN-A- 102 668 647
- CN-A- 103 281 411
- CN-A- 103 345 312
- CN-A- 103 368 935
- CN-A- 103 809 874
- CN-A- 104 216 670
- GB-A- 2 469 169
- US-A1- 2013 234 913
- US-A1- 2013 329 600

## Description

### FIELD OF THE DISCLOSURE

The present disclosure relates to the field of external display technologies, and more particularly, to a system and method for external display.

### BACKGROUND OF THE DISCLOURE

With the advancement and development of communication technologies, smart phones are becoming more and more popular. Accordingly, the dominant frequency of the processor of a smart phone is becoming higher and higher, ranging from 800 MHz to 2.3 GHz, or even higher. And cores in the processor are increasing from single-core to multi-core. Thus, the data processing capabilities of existing smartphones are becoming stronger and stronger. The performance can even be comparable to an ordinary notebook computer. However, when processing documents, receiving or sending emails, or watching a video on a smartphone, limited by its size and screen, the user experience is not as good as that on an ordinary notebook computer.

US20130234913A1 discloses an apparatus and method for providing an enhanced Wireless Fidelity (Wi-Fi) display (WFD) session in a WFD network, and system thereof. Once a WFD connection is setup, a WFD source device broadcasts a WFD capability request frame to multiple WFD sink devices over the WFD connection. In response, each of the WFD sink devices sends a WFD capability response frame to the WFD source device. The WFD capability response frame contains capability information and audio and video intent value associated with the respective WFD sink devices. The WFD source device consolidates a sink property table using the capability information and the audio and video intent value associated with respective WFD sink devices. The WFD source device establishes a WFD session with the multiple WFD sink devices. The WFD source device streams multimedia content to the WFD sink devices in a multicast manner. However, US20130234913A1 only disclose how to providing an enhanced WFD session in a WFD network between a single WFD source device and the WFD sink devices having only one display device LCD TV. US20130234913A1 does not disclose how to providing an enhanced WFD session in a WFD network between a single WFD source device and two display WFD sink devices of a smartbook and a television.

US20130329600A1 discloses a WDF device information protocol where the reserved bit 14 is used to indicate support for 60 GHz band for the communication. However, US20130329600A1 also does not disclose how to providing an enhanced WFD session in a WFD network between a single WFD source device and two display WFD sink devices of a smartbook and a television.

### SUMMARY OF THE DISCLOSURE

A system and method for external display is provided by embodiments of the present disclosure, making possible external display with a smartphone and thus enhancing the user experience.

According to a first aspect of the present disclosure, a system for external display is provided, the system comprising: a mobile device comprised of a first communication module, a storage module configured to store at least a first interface displayed by the mobile device, a second interface and a third interface, and a processing module connected to the first communication module and the storage module; the system further comprising a display device being a smartbook or a television, each of the smartbook and the television comprises a second communication module configured to establish a connection with the first communication module, and a display module connected to the second communication module; wherein, the first communication module and the second communication module are both WiFi modules, and establish a connection via wireless WiFi, the processing module may generate an external display information and broadcast the external display information through the first communication module; the second communication module may acquire the external display information and transmit an identifier information of the display device to the processing module based on the external display information; wherein the identifier information of the display device comprises WFD (WiFi display) device information of the second communication module; and the WFD device information is a 2 bytes data with bits 0-13 being the existing bits having definition and bits 14 and 15 being reserved bits; wherein the identifier information of the smartbook is set on bit 14 of the WFD device information, and the identifier information of the television is set on bit 15 of the WFD device information; and the processing module determines whether the bit 14 or the bit 15 of the WFD device information is 1; when the processing module determines that the bit 14 of the WFD device information is 1, the smartbook is determined to be in accordance with the second interface, and the mobile device transmits the second interface to the smartbook to make the smartbook display the second interface; and when the processing module determines that the bit 14 of the WFD device information is 0 and the bit 15 of the WFD device information is 1, the television is determined to be in accordance with the third interface, and the mobile device transmits the third interface to the television to make the television display the third interface.

The display device may further include: a keyboard input module connected to the second communication module and configured to enable keyboard input module operations on the second interface; a mouse input module connected to the second communication module and configured to enable mouse input module operations on the second interface.

The mobile device may be a smartphone, a tablet computer or an ipad.

According to a second aspect, a method based on the external display system is provided for external display, where the external display system includes a mobile device and a display device; the display device being a smartbook or a television; the mobile device including at least a first interface, a second interface and a third interface;, the method comprising: establishing a connection between the mobile device and the display device via wireless WiFi; the mobile device generating an external display information and broadcasting the external display information; the display device acquiring the external display information and transmitting an identifier information of the display device to the mobile device based on the external display information; the identifier information of the display device comprises WFD (WiFi display) device information of the second communication module; and the WFD device information is a 2 bytes data with bits 0-13 being the existing bits having definition and bits 14 and 15 being reserved bits; the mobile device acquiring the identifier the information of the display device from the display device; the mobile device determining whether the display device is in accordance with the second interface or the third interface based on the identifier information of the display device; if so, the mobile device transmitting the second interface or the third interface to the display device to make the display device display the second interface or the third interface; wherein an identifier of the smartbook is set on bit 14 of the WFD device information, and an identifier of the television is set on bit 15 of the WFD device information; and the mobile device determines whether the bit 14 or the bit 15 of the WFD device information is 1; when the mobile device determines that the bit 14 of the WFD device information is 1, the smartbook is determined to be in accordance with the second interface, and the mobile device transmits the second interface to the smartbook to make the smartbook display the second interface; and when the mobile device determines that the bit 14 of the WFD device information is 0 and the bit 15 of the WFD device information is 1, the television is determined to be in accordance with the third interface, and the mobile device transmits the third interface to the television to make the television display the third interface.

By the above solution, the present disclosure may provide the following beneficial effects: through obtaining the information of the display device, the processing module determines whether the display device is in accordance with the second interface based on the information of the display device, if so, the mobile device transmits the second interface to the display device to make the display device display the second interface, thus enabling the second interface of the mobile device to be displayed on the display device and therefore enhancing the user experience.

### BRIEF DESCRIPTION OF THE DRAWINGS

FIG. 1 is a schematic diagram of a system for external display according to a first embodiment of the present disclosure.
FIG. 2 illustrates the format of WFD information elements as illustrated in FIG. 1.
FIG. 3 illustrates the format of WFD sub-elements as illustrated in FIG. 1.
FIG. 4 illustrates the format of sub-elements body field as illustrated in FIG. 1.
FIG. 5 illustrates the format of the WFD device information as illustrated in FIG. 1.
FIG. 6 is a flow chart illustrating a method for external display according to the first embodiment of the present disclosure.

### DETAILED DESCRIPTION OF THE DISCLOSURE

Below a definite and complete description will be made on the technical solution according to embodiments of the present disclosure with reference to the accompanying drawings of embodiments of the present disclosure. Apparently, the described embodiments are merely some but not all of the embodiments of the present disclosure. Based on the embodiments of the present disclosure, all other embodiments obtained by those of ordinary skill in the art without making inventive effort shall fall within the protection scope of the present disclosure.

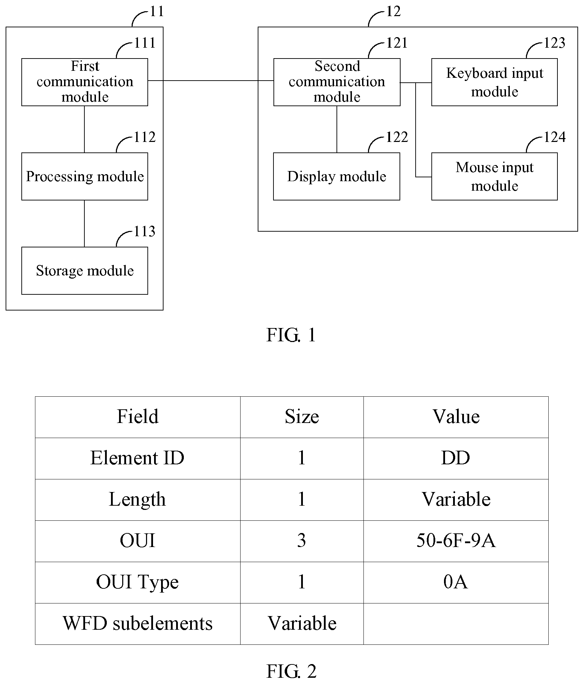

Referring now to FIG. 1, a schematic diagram of a system for external display according to a first embodiment of the present disclosure is shown. As is shown in FIG. 1, the external display system 10 illustrated in the present embodiment comprises a mobile device 11 and a display device 12.

The mobile device 11 comprises a first communication module 111, a processing module 112 and a storage module 113. The processing module 112 is connected to the first communication module 111 and the storage module 113. The mobile device 11 is connected to the external display device 12 through the first communication module 111. The storage module 113 is configured to store at least a first interface displayed by the mobile device 11 as the default interface and a second interface. In other embodiments, those of ordinary skill in the art can certainly set multiple interfaces each paired with a display device, so as to make each of the multiple display devices display a corresponding interface.

The display device 12 comprises a second communication module 121, a display module 122, a keyboard input module 123 and a mouse input module 124. The second communication module 121 is connected to the display module 122, the keyboard input module 123 and the mouse input module 124, respectively. The second communication module 121 is configured to establish a connection with the first communication module 111. The keyboard input module 123 is configured to enable keyboard input operations on the second interface displayed on the display module 122. The mouse input module 124 is configured to enable cursor moving operations on the second interface displayed on the display module 122. A movable cursor would appear on the second interface when the second interface is displayed on the display module 122. The movable cursor may facilitate the user to input through the mouse input module 124. In addition, the display module 122 can also be a touch screen, and the user may touch the touch screen to realize manipulation of the second interface.

The first communication module 111 and the second communication module 112 are both WiFi modules and establish a connection via the wireless WiFi. In other examples not covered by the claims, those of ordinary skill in the art can certainly utilize other means to establish a connection between the first communication module 111 and the second communication module 121. For example, the first communication module 111 and the second communication module 121 may establish a connection via the mobile high-definition audio/video standard interface, physically, via the mobile high-definition link (MHL) cable.

The processing module 112 is configured to generate external display information and broadcast the external display information through the first communication module 111. The second communication module 121 acquires the external display information and transmits the information of the display device 12 to the first communication module 111 based on the external display information. The processing module 112 acquires the information of the display device 12 via the first communication module 111. The processing module 112 determines whether the display device 12 is in accordance with the second interface based on the information of the display device 12. If so, the mobile device 11 transmits the second interface to the display device 12 through the first communication module 111 to make the display device 12 display the second interface, thus realizing external display with the mobile device 11.

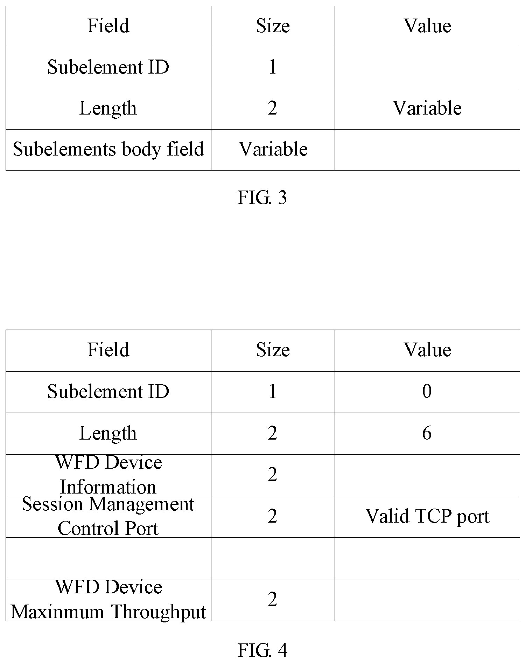

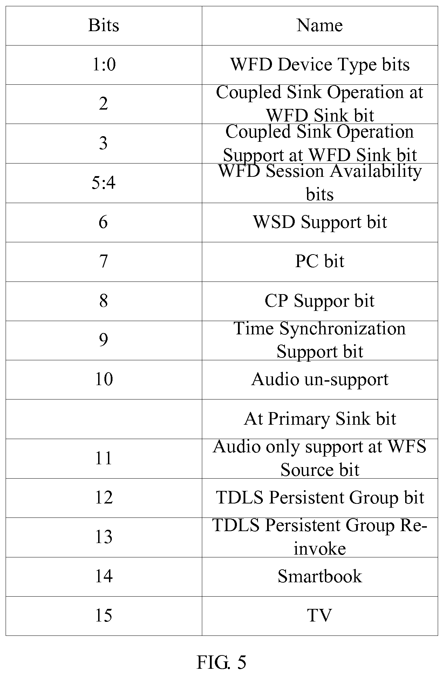

Both the first communication module 111 and the second communication module 121 adopt the WiFi display (WFD) protocol. The WiFi display protocol includes WFD information elements. The format of the WFD information elements is illustrated in FIG. 2. The WFD information elements may include WFD sub-elements of which the format is illustrated in FIG. 3. The WFD sub-elements may further include sub-elements body fields of which the format is illustrated in FIG. 4. And the sub-elements body field includes the WFD device information, the format of the WFD device information is illustrated in FIG. 5. Referring now to FIG. 5, the WFD device information is a 2 bytes data with bits 0-13 being the existing bits having clear definition and bits 14 and 15 being the reserved bits.

The information of the display device 12 includes the WFD device information, and an identifier of the display device 12 is set on a reserved bit of the WFD device information. The identifier of the display device 12 is set on bit 14 of the WFD device information. Determining by the processing module 112 whether the display device 12 is in accordance with the second interface based on the information of the display device 12 includes: if the processing module 112 determines that the reserved bit of the WFD device information is set to be 1(i.e., the bit 14 is 1), then the display device 12 is in accordance with the second interface; if the processing module 112 determines that the reserved bit of the WFD device information is set to be 0(i.e., the bit 14 is 0), then the display device 12 is not in accordance with the second interface.

Below the present disclosure will be described in detail taking the display device 12 as a smartbook for example. The smartbook looks the same in appearance with an ordinary notebook computer, but the smartbook doesn't have a central processor, a hard disk, a memory chip, and the like. The smartbook can be used in combination with the mobile device 11, resulting in no difference with an ordinary notebook book computer, which thus can reduce the cost.

The processing module 112 of the mobile device 11 generates external display information and broadcasts the external display information through the first communication module 111. The second communication module 121 of the display device 12 acquires the external display information from the first communication module 111 and transmits the WFD device information to the first communication module 111. The display device 12 defines bit 14 of the WFD device information as the smartbook. For example, the bit 14 may be defined as the smartbook, while bit 15 is reserved.

The processing module 112 of the mobile device 11 acquires the WFD device information from the first communication module 111, and determines whether the bit 14 in the WFD device information is 1. If so, then the processing module 112 acquires the second interface corresponding to the display device 12 from the storage module 113, and transmits the second interface to the display device 12 through the first communication module 111. The display device 12 acquires the second interface via the second communication module 121 and displays the second interface on the display module 122. If not, the first communication module 111 of the mobile device 11 may disconnect with the second communication module 121 of the display device 12.

When the second interface is displayed on the display module 122 of the display device 12, the user may manipulate the second interface via the keyboard input module 123 and the mouse input module 124.

The mobile device 11 may be a smartphone, a tablet computer or an ipad, and the display device may be a television, a display device or a smartbook.

Additionally, when the display device 12 is a television, the display device 12 defines bit 15 of the WFD device information as the television, and set the bit 14 to be 0. If the processing module 112 determines that the reserved bit 14 of the WFD device information is 0, the processing module 112 further determines whether the reserved bit 15 in the WFD device information is 1, if so, the processing module 112 acquires a third interface associated with the television from the storage module 113, and transmits the third interface to the display device 12 to make the display device 12 display the third interface.

In the present embodiment, the first communication module 111 obtains the information of the display device 12, and the processing module 112 determines whether the display device 12 is in accordance with the second interface based on the information of the display device 12, if so, the mobile device 11 transmits the second interface to the display device 12 to make the display device 12 display the second interface, thus enabling the second interface of the mobile device 11 to be displayed on the display device 12, thereby enhancing the user experience.

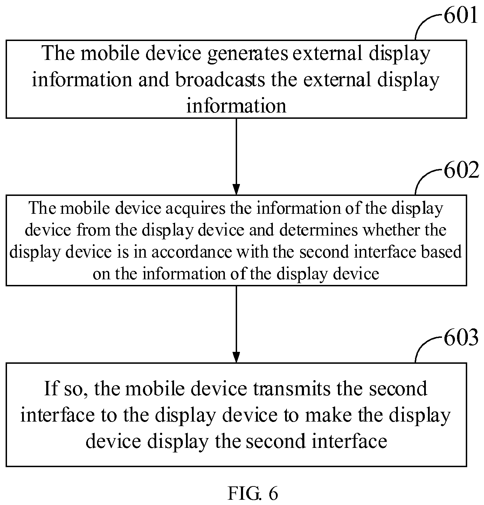

The present disclosure further provides a method for external display, which will be described on the basis of the external display system 10 as illustrated in the first embodiment. As is shown in FIG. 6, the method for external display to be illustrated by the present embodiment comprises:
S601: generating, by the mobile device 11, external display information, and broadcasting the external display information;
S602: acquiring, by the mobile device 11, the information of the display device 12 from the display device 12, and determining whether the display device 12 is in accordance with the second interface based on the information of the display device 12;
S603: if so, transmitting, by the mobile device 11 the second interface to the display device 12 to make the display device 12 display the second interface.

In the step S601, the display device 12 acquires the external display information from the mobile device 11, and transmits the information of the display device 12 to the mobile device 11 based on the external display information.

In the step S602, the mobile device 11 may establish a connection with the display device 12 via the wireless WiFi. The information of the display device 12 may include WFD device information, and an identifier of the display device 12 is set on a reserved bit of the WFD device information. The mobile device 11 may determine whether the reserved bit of the WFD device information is 1.

In the step S603, if the mobile device 11 determines that the reserved bit of the WFD device information is 1, the mobile device 11 determines that the display device 12 is in accordance with the second interface, and transmits the second interface to the display device 12.

As a conclusion, in the present disclosure, the mobile device 11 obtains the information of the display device 12, and determines whether the display device 12 is in accordance with the second interface based on the information of the display device 12, if so, the mobile device 11 transmits the second interface to the display device 12 to make the display device 12 display the second interface, thus enabling the second interface of the mobile device 11 to be displayed on the display device 12 and therefore enhancing the user experience.

What is described above is merely embodiments of the present disclosure, thus shouldn't be construed to be limiting the patent scope of the present disclosure.

## Claims

1. A system for external display, comprising:
a mobile device (11), comprising:
a first communication module (111);
a storage module (113) configured to store at least a first interface displayed by the mobile device (11), a second interface and a third interface;
a processing module (112) connected to the first communication module (111) and the storage module (113);
the system further comprising
a display device (12) being a smartbook or a television, each of the smartbook and the television comprising:
a second communication module (121) configured to establish a connection with the first communication module (111);
a display module (122) connected to the second communication module (121);
wherein, the first communication module (111) and the second communication module (121) are both WiFi modules, and are configured to establish a connection via wireless WiFi,
the processing module (112) is configured to generate an external display information and to broadcast the external display information through the first communication module (111); the second communication module (121) is configured to acquire the external display information, and to transmit an identifier information of the display device (12) to the processing module (112) based on the external display information; wherein the identifier information of the display device (12) comprises WFD, WiFi display, device information of the second communication module (121) ; and the WFD device information is a 2 bytes data with bits 0-13 being the existing bits having definition and bits 14 and 15 being reserved bits; **characterized in that** the identifier information of the smartbook is set on bit 14 of the WFD device information, and the identifier information of the television is set on bit 15 of the WFD device information; and the processing module (112) determines whether the bit 14 or the bit 15 of the WFD device information is 1;
when the processing module (112) determines that the bit 14 of the WFD device information is 1, the smartbook is determined to be in accordance with the second interface, and the mobile device (11) is configured to transmit the second interface to the smartbook to make the smartbook display the second interface; and
when the processing module (112) determines that the bit 14 of the WFD device information is 0 and the bit 15 of the WFD device information is 1, the television is determined to be in accordance with the third interface, and the mobile device (11) is configured to transmit the third interface to the television to make the television display the third interface.

2. The system according to the claim 1, wherein the display device (12) further comprises:
a keyboard input module (123) connected to the second communication module (121) and configured to enable keyboard input module (123) operations on the second interface;
a mouse input module (124) connected to the second communication module (121) and configured to enable mouse input module (124) operations on the second interface.

3. The system according to the claim 1 or 2, wherein the mobile device (11) is a smartphone, a tablet computer or an ipad.

4. A method for external display, wherein the method is based on a system for external display, the system comprising: a mobile device (11) and a display device (12); the display device (12) being a smartbook or a television; and
the mobile device (11) comprising at least a first interface, a second interface and a third interface; the method comprising:
establishing a connection between the mobile device (11) and the display device (12) via wireless WiFi;
the mobile device (11) generating an external display information and broadcasting the external display information;
the display device (12) acquiring the external display information and transmitting an identifier information of the display device (12) to the mobile device (11) based on the external display information; the identifier information of the display device (12) comprises WFD, WiFi display, device information of the second communication module (121); and the WFD device information is a 2 bytes data with bits 0-13 being the existing bits having definition and bits 14 and 15 being reserved bits;
the mobile device (11) acquiring the identifier information of the display device (12) from the display device (12);
the mobile device (11) determines whether the display device (12) is in accordance with the second interface or the third interface based on the identifier information of the display device (12);
if so, the mobile device (11) transmitting the second interface or the third interface to the display device (12) to make the display device (12) display the second interface or the third interface;
**characterized in that** an identifier of the smartbook is set on bit 14 of the WFD device information, and an identifier of the television is set on bit 15 of the WFD device information; and the mobile device (11) determines whether the bit 14 or the bit 15 of the WFD device information is 1;
when the mobile device (11) determines that the bit 14 of the WFD device information is 1, the smartbook is determined to be in accordance with the second interface, and the mobile device (11) transmits the second interface to the smartbook to make the smartbook display the second interface; and
when the mobile device (11) determines that the bit 14 of the WFD device information is 0 and the bit 15 of the WFD device information is 1, the television is determined to be in accordance with the third interface, and the mobile device (11) transmits the third interface to the television to make the television display the third interface.

## Patentansprüche

1. Externes Anzeigesystem, umfassend:
ein mobiles Gerät (11), umfassend:
ein erstes Kommunikationsmodul (111);
ein Speichermodul (113), das zur Speicherung zu mindestens einer von dem mobilen Gerät angezeigten ersten Schnittstelle, einer zweiten Schnittstelle und einer dritten Schnittstelle konfiguriert ist;
ein Verarbeitungsmodul (112), das mit dem ersten Kommunikationsmodul (111) und dem Speichermodul (113) verbunden ist;
wobei das System weiter umfasst:
eine Anzeigevorrichtung (12), die ein Smartbook oder ein Fernseher ist, wobei jeder des Smartbooks und des Fernsehers umfasst:
ein zweites Kommunikationsmodul (121), das zur Herstellung einer Verbindung mit der ersten Kommunikationsmodul (111) konfiguriert ist;
ein Anzeigemodul (122), das mit dem zweiten Kommunikationsmodul (121) verbunden ist; wobei, das erste Kommunikationsmodul (111) und das zweite Kommunikationsmodul (121) beide WiFi-Module sind, und zur Herstellung einer Verbindung über ein drahtloses WiFi-Netzwerk konfiguriert sind, das Verarbeitungsmodul (112) zur Erzeugung externer Anzeigeinformationen und zur Übertragung der externen Anzeigeinformationen über das erste Kommunikationsmodul (111) konfiguriert ist; das zweite Kommunikationsmodul (121) zur Erfassung der externen Anzeigeinformationen, und zum Übermitteln von Identifizierungsinformationen der Anzeigevorrichtung (12) an das Verarbeitungsmodul (112) auf Grund der externen Anzeigeinformationen konfiguriert ist, wobei die Identifizierungsinformationen der Anzeigevorrichtung (12) WFD-WiFi-Anzeigevorrichtungsinformationen des zweiten Kommunikationsmoduls (121) umfassen; und die WFD-Vorrichtungsinformationen eine 2-Bytesangabe sind mit den existierenden Bits existierenden Bits 0-13, die eine Definition aufweisen, und den Bits 14 und 15, die reservierte Bits sind;
System **dadurch gekennzeichnet, dass** die Identifizierungsinformationen des Smartbooks auf Bit 14 der WFD-Vorrichtungsinformationen eingestellt sind, und die Identifizierungsinformationen des Fernsehers auf Bit 15 der WFD-Vorrichtungsinformationen eingestellt sind; und das Verarbeitungsmodul (112) bestimmt, ob das Bit 14 oder das Bit 15 der WFD-Vorrichtungsinformationen 1 ist; wenn das Verarbeitungsmodul (112) bestimmt, dass das Bit 14 der Vorrichtungsinformationen 1 ist, das Smartbook gemäß der zweiten Schnittstelle bestimmt ist, und das mobile Gerät (1) zur Übertragung der zweiten Schnittstelle an das Smartbook konfiguriert ist, damit das Smartbook die zweiten Schnittstelle anzeigt; und wenn das Verarbeitungsmodul (112) bestimmt, dass das Bit 14 der WFD-Vorrichtungsinformationen 0 ist und das Bit 15 der WFD-Vorrichtungsinformationen 1 ist, der Fernseher gemäß der dritten Schnittstelle bestimmt ist, und das mobile Gerät (1) zur Übertragung der dritten Schnittstelle an den Fernseher konfiguriert ist, damit der Fernseher die dritten Schnittstelle anzeigt.

2. System nach Anspruch 1, wobei die Anzeigevorrichtung (12) weiter umfasst:
ein Tastatureingabemodul (123), das mit dem zweiten Kommunikationsmodul (121) verbunden ist und zur Ermöglichung von Tastatureingabemodulvorgängen auf die zweite Schnittstelle konfiguriert ist;
ein Mauseingabemodul (124), das mit dem zweiten Kommunikationsmodul (121) verbunden ist und zur Ermöglichung von Mauseingabemodulvorgängen auf die zweite Schnittstelle konfiguriert ist.

3. System nach Anspruch 1 oder 2, wobei das mobile Gerät (11) ein Smartphone, ein Tablet-Computer oder ein iPad ist.

4. Externes Anzeigeverfahren, wobei das Verfahren auf einem externen Anzeigesystem basiert ist, wobei das System ein mobiles Gerät (11) und eine Anzeigevorrichtung (12) umfasst; die Anzeigevorrichtung (12) ein Smartbook oder ein Fernseher ist; und das mobiles Gerät (11) zu mindestens eine erste Schnittstelle, eine zweite Schnittstelle und eine dritte Schnittstelle umfasst; wobei das Verfahren die folgenden Schritte umfasst:
Herstellen einer Verbindung zwischen dem mobilen Gerät (11) und der Anzeigevorrichtung (12) über ein drahtloses WiFi-Netzwerk;
das mobile Gerät (11) erzeugt externe Anzeigeinformationen und überträgt die externen Anzeigeinformationen;
die Anzeigevorrichtung (12) erfasst die externen Anzeigeinformationen, und übermittelt Identifizierungsinformationen der Anzeigevorrichtung (12) an das mobile Gerät (11) auf Grund der externen Anzeigeinformationen, wobei die Identifizierungsinformationen der Anzeigevorrichtung (12) WFD-WiFi-Anzeigevorrichtungsinformationen des zweiten Kommunikationsmoduls (121) umfassen; und die WFD-Vorrichtungsinformationen eine 2-Bytesangabe sind mit den existierenden Bits 0-13, die eine Definition aufweisen, und den Bits 14 und 15, die reservierte Bits sind;
das mobile Gerät (11) erfasst die Identifizierungsinformationen der Anzeigevorrichtung (12) aus der Anzeigevorrichtung (12);
das mobile Gerät (11) bestimmt, ob die Anzeigevorrichtung (12) gemäß der zweiten Schnittstelle oder der dritten Schnittstelle auf Grund der externen Anzeigeinformationen der Anzeigevorrichtung (12) ist; wobei, wenn dies der Fall ist, das mobile Gerät (11) die zweite Schnittstelle oder die dritte Schnittstelle übermittelt, damit die Anzeigevorrichtung (12) die zweite Schnittstelle oder die dritte Schnittstelle anzeigt;
Verfahren **dadurch gekennzeichnet, dass** eine Kennung des Smartbooks auf Bit 14 der WFD-Vorrichtungsinformationen eingestellt wird, und eine Kennung des Fernsehers auf Bit 15 der WFD-Vorrichtungsinformationen eingestellt wird; und das mobile Gerät (11) bestimmt, ob das Bit 14 oder das Bit 15 der WFD-Vorrichtungsinformationen 1 ist; wenn das mobile Gerät (11) bestimmt, dass das Bit 14 der WFD-Vorrichtungsinformationen 1 ist, das Smartbook gemäß der zweiten Schnittstelle bestimmt wird, und das mobile Gerät (1) die zweite Schnittstelle an das Smartbook überträgt, damit das Smartbook die zweite Schnittstelle anzeigt; und wenn das mobile Gerät (11) bestimmt, dass das Bit 14 der WFD-Vorrichtungsinformationen 0 ist und das Bit 15 der WFD-Vorrichtungsinformationen 1 ist, der Fernseher gemäß der dritten Schnittstelle bestimmt wird, und das mobile Gerät (11) die dritte Schnittstelle an den Fernseher überträgt, damit der Fernseher die dritte Schnittstelle anzeigt.

## Revendications

1. Système d'affichage externe comprenant:
un dispositif mobile (11) comprenant:
un premier module de communication (111);
un module de stockage (113) configuré pour stocker au moins une première interface affichée par le dispositif mobile (11), une deuxième interface et une troisième interface;
un module de traitement (112) connecté au premier module de communication (11) et au module de stockage (113);
le système comprenant un dispositif d'affichage (12) qui est un smartbook ou une télévision, chacun parmi le smartbook et la télévision comprenant:
- un deuxième module de communication (121) configuré pour établir une connexion avec le premier module de communication (111);
- un module d'affichage (122) connecté au deuxième module de communication (121);
système dans lequel le premier module de communication (111) et le deuxième module de communication (121) sont tous les deux des modules WiFi, et sont configurés pour établir une connexion par l'intermédiaire d'un réseau WiFi sans fil, le module de traitement (112) est configuré pour générer des informations d'affichage externe et pour émettre les informations d'affichage externe par l'intermédiaire du premier module de communication (111); le deuxième module de communication (111) est configuré pour acquérir les informations d'affichage externe, et pour transmettre des informations d'identifiant du dispositif d'affichage au module de traitement (112) sur base des informations d'affichage externe, où les informations d'identifiant du dispositif d'affichage (12) comprennent des informations de dispositif d'affichage WiFi, WFD du deuxième module de communication (121); et les informations de dispositif WFD sont une donnée de 2 octets avec les bits 0 - 13 étant les bits existants présentant une définition et les bits 14 et 15 étant des bits réservés, système caractérisé en de que les informations d'identifiant du smartbook sont fixées au bit 14 des informations de dispositif WFD, et les informations d'identifiant de la télévision sont fixées au bit 15 des informations de dispositif WFD; et le module de traitement (112) détermine si le bit 14 ou le bit 15 des informations de dispositif WFD est 1;
lorsque le module de traitement (112) détermine que le bit 14 des informations de dispositif WFD est 1, le smartbook est déterminé comme étant en conformité avec la deuxième interface, et le dispositif mobile (11) est configuré pour transmettre la deuxième interface au smartbook afin que le smartbook affiche la deuxième interface; et
lorsque le module de traitement (112) détermine que le bit 14 des informations de dispositif WFD est 0 et que le bit 15 du dispositif WFD est 1, la télévision est déterminée comme étant en conformité avec la troisième interface, et le dispositif mobile (11) est configuré pour transmettre la troisième interface à la télévision afin que la télévision affiche la troisième interface.

2. Système selon la revendication 1, dans lequel le dispositif d'affichage (12) comprend en outre:
un module d'entrée par clavier (123) connecté au deuxième module de communication (121) et configuré pour permettre des opérations par module d'entrée par clavier (123) sur la deuxième interface;
un module d'entrée par souris (124) connecté au deuxième module de communication (121) et configuré pour permettre des opérations par module d'entrée par souris (124) sur la deuxième interface.

3. Système selon la revendication 1 ou 2, dans lequel le dispositif mobile (11) est un téléphone intelligent, une tablette ou un iPad.

4. Procédé d'affichage externe, dans lequel le procédé est basé sur un système d'affichage externe, le système comprenant: un dispositif mobile (11) et un dispositif d'affichage (12); le dispositif d'affichage (12) étant un smartbook ou une télévision; et le dispositif mobile (11) comprenant au moins une première interface, une deuxième interface et une troisième interface; le procédé comprenant les étapes suivantes:
établir une connexion entre le dispositif mobile (11) et le dispositif d'affichage (12) par l'intermédiaire d'un réseau WiFi sans fil;
le dispositif mobile (11) générant des informations d'affichage externe et émettant les informations d'affichage externe;
le dispositif d'affichage (12) acquérant les informations d'affichage externe, et transmettant des informations d'identifiant du dispositif d'affichage (12) au dispositif mobile (112) sur base des informations d'affichage externe; où les informations d'identifiant du dispositif d'affichage (12) comprennent des informations de dispositif d'affichage WiFi, WFD du deuxième module de communication (121); et les informations de dispositif WFD sont une donnée de 2 octets avec les bits 0 - 13 étant les bits existants présentant une définition et les bits 14 et 15 étant des bits réservés;
le dispositif mobile (11) acquérant les informations d'identifiant du dispositif d'affichage (12) à partir du dispositif d'affichage (12); où le dispositif mobile (11) détermine si le dispositif d'affichage (12) est en conformité avec la deuxième interface ou la troisième interface sur base des informations d'identifiant du dispositif d'affichage (12);
si c'est le cas, le dispositif mobile (11) transmet la deuxième interface ou la troisième interface au dispositif d'affichage (12) afin que le dispositif d'affichage (12) affiche la deuxième interface ou la troisième interface;
procédé **caractérisé en ce qu'**un identifiant du smartbook est fixé au bit 14 des informations de dispositif WFD, et un identifiant de la télévision est fixé au bit 15 des informations de dispositif WFD; et le dispositif mobile (11) détermine si le bit 14 ou le bit 15 des informations de dispositif WFD est 1;
lorsque le dispositif mobile (11) détermine que le bit 14 des informations de dispositif WFD est 1, le smartbook est déterminé comme étant en conformité avec la deuxième interface, et le dispositif mobile (11) transmet la deuxième interface au smartbook afin que le smartbook affiche la deuxième interface; et
lorsque le dispositif mobile (11) détermine que le bit 14 des informations de dispositif WFD est 0 et que le bit 15 des informations de dispositif WFD est 1, la télévision est déterminée comme étant en conformité avec la troisième interface, et le dispositif mobile (11) transmet la troisième interface à la télévision afin que la télévision affiche la troisième interface.
